# EUROPEAN PATENT APPLICATION

(11) **EP 1 649 791 A2**
(43) Date of publication of application: **26.04.2006**
(21) Application number: 05256520.7
(22) Date of filing: 21.10.2005
(51) Int. Cl.: A47J 27/21

(54) **Heaters for liquid heating vessels**

(30) Priority: 21.10.2004 GB 0423429; 14.01.2005 GB 0500750
(71) Applicant: STRIX LIMITED, Ronaldsway, Isle of Man IM9 2RG (GB)
(72) Inventor: Garvey, Vincent Joseph, Isle of Man (GB)
(74) Representative: Samuels, Adrian James

(57) **Abstract**

A heater for a liquid heating vessel comprises a stainless steel heater plate (200) and a steel-sheathed heating element (202) directly bonded to or formed on the underside of the heater plate (200). The heater plate has a thickness of between 0.2 and 0.4 mm.

The element (202) comprises two raised and two lowered portions alternating around the circumference. The heater plate has corresponding raised and lowered portions. The central region of the plate (200) is a convex dome.

## Description

The inventions disclosed herein relate to electrical heater assemblies of the type which are intended to close an opening in the base of the liquid chamber of a liquid heating vessel and which include a resistance heating element. They relate particularly, but not exclusively, to heaters for heating water - either to boiling or to a temperature below boiling.

Heaters which may be used to close an opening in the base of a liquid heating vessel (known in the art as "underfloor heaters") and which comprise a sheathed heating element on the underside are well known in the art. The relatively low cost of setting up and operating manufacturing facilities for such heaters has in recent years seen them come to predominate in most market sectors.

The conventional construction of an underfloor heater is to form a generally flat circular plate out of stainless steel typically between 0.4 mm and 0.8 mm thick. Suitable circumferential formations are provided at the edges of the plate to allow it to be sealingly retained in the vessel - such as a peripheral channel in accordance with the Applicant's Sure Seal system, which is described in greater detail in WO 96/18331. However, the central, heated region is typically flat.

A circular aluminium plate known as a diffuser plate is then brazed onto the underside of the flat central region of the stainless steel plate. The diffuser plate is usually of the order of 1.5 to 3 mm thick. A sheathed heating element is then brazed onto the diffuser plate. The element consists of an elongate, arcuate aluminium tube, which encapsulates a coiled resistance wire packed in magnesium oxide.

Threaded bosses are also staked onto or drawn from the diffuser plate and finally a control unit or discrete control components are attached to the diffuser plate, with the thermally responsive actuators thereof in intimate thermal contact with the diffuser plate.

The diffuser plate performs a number of functions. Firstly, it promotes lateral conduction of heat from the element which would otherwise be inhibited by the poor thermal conductivity of the stainless steel plate. This helps to enhance heat flow into the water to some degree during normal use but more significantly it allows heat to be conducted into the bimetals (or other thermal sensors of the control) rapidly if the vessel is switched on dry. However it means that the water temperature cannot be accurately measured through the base as it will always be influenced by the temperature of the element.

Secondly the diffuser plate serves to mount the control unit and element rigidly to the stainless steel plate.

Thirdly the presence of the diffuser plate prevents distortion in the base plate when the element is brazed on which might result from temperature variations across the base plate during cooling.

However, the Applicant has appreciated that the material cost of the stainless steel base plate and aluminium diffuser plate both represent significant proportions of the overall production cost of sheathed underfloor heaters and it is an overall object of this invention to reduce one or both of these costs.

When viewed from a first aspect the present invention provides a heater for a liquid heating vessel comprising a stainless steel heater plate and a heating element directly bonded to or formed on the underside of said heater plate, wherein said heater plate has a thickness of less than or substantially equal to 0.4 mm.

Preferably the heater plate has a thickness of less than or substantially equal to 0.3 mm. Further preferably the heater plate has a thickness substantially equal to 0.2 mm.

Thus it will be seen by those skilled in the art that in accordance with the invention a thin stainless steel plate is provided as the substrate for the heater without a diffuser plate being provided. This significantly reduces the material cost since the thinner stainless steel is less expensive and the cost of the aluminium for the diffuser plate is avoided.

It was previously believed in the art that such a heater of a conventional size for kettles, beverage makers etc. could not be constructed to be sufficiently robust or with a visual appearance sufficiently acceptable by customers to make it commercially viable. In particular without a diffuser plate it would be expected that excessive distortion would occur during manufacture or during use. However, the Applicant has appreciated that this is indeed possible. Various ways of assisting in one or both of these aims are set out hereinbelow; along with other beneficial arrangements.

In accordance with a first set of embodiments the heater is provided with a steel support bracket attached to and extending across the heater plate. This increases the rigidity of the heater plate. It also provides a suitable mount for a control unit or control components which would conventionally have been mounted to the diffuser plate.

Such an arrangement is novel and inventive in its own right and thus when viewed from a second aspect the present invention provides an electric heater for a liquid heating vessel comprising a heater plate for closing an opening in the base of the liquid heating vessel and an electric heating element formed on or attached to the underside of said heater plate, the heater further comprising a steel support bracket attached to and extending across said heater plate.

The bracket could be just steel but preferably it is coated, preferably with Zinc. Most preferably commercially available Zintec (trade mark) is used.

Preferably the steel bracket is provided with means for attaching a control unit thereto. These means could take any suitable form such as threaded bosses or apertures or flat spots for receiving a rivet. Preferably however the bracket comprises at least one resilient clip. This avoids the need to provide separate bosses or the like and simplifies assembly. It has been appreciated that such a feature is made possible by the use of steel as a bracket material as opposed to say aluminium which would not have sufficient resilience.

The steel support bracket may provide purely structural support. Preferably however, the bracket is in good thermal contact with one or both of the heating element or the base plate. This allows it to act as a heat conductor, to a thermal sensor, such as a bimetallic actuator, mounted thereon - e.g. as part of a thermally sensitive control unit. It is somewhat counterintuitive to use the steel bracket as a thermal conductor since steel is less thermally conductive than say aluminium. However, by making the bracket of mild steel and as it is smaller in surface area than a traditional diffuser plate, it could be made thicker to compensate whilst still being lower cost. Indeed the cost can be reduced significantly in accordance with preferred embodiments e.g. by a factor of 5.

Such a bracket/heat conductor could be arranged to lie substantially against the underside of the heater plate, but preferably it is in thermal contact therewith in only a small number of discrete regions, preferably one. Such an arrangement is advantageous in allowing the relative degrees to which the temperature of the thermal sensor is influenced by the heating element and the liquid being heated respectively, to be selected as desired. This may be done through thermal constrictions. For example, if it was desired for the sensor to measure predominantly the element temperature a thermal construction could be designed in/on the bracket between the location of the thermal sensor in use and the contact zone between the bracket and the heater plate. Alternatively, a constriction between the element and the sensor would cause the liquid temperature predominantly to be measured. The thermal constriction could take the form of any one or a combination of cutouts, local thinning or waisting.

In the foregoing discussion the support member can effectively act as a heat bridge between the heating element and a thermal sensor such as a thermally sensitive actuator in good thermal contact with the heat bridge.

In a further preferred set of embodiments two such heat bridges are provided, preferably one for each of two thermal sensors. This is advantageous over a single support member extending across the heater where the latter is not required for giving structural support since the two heat bridges can be much shorter and so represent a smaller material cost.

When viewed from a further aspect the invention provides an electric heater for a liquid heating vessel comprising a heater plate for closing an opening in the base of the vessel, a heating element formed on or attached to the underside of the plate and a pair of heat bridges in good thermal contact with the heating element and mounting or being adapted to mount respective thermal sensors.

The support member or heat bridges may be brazed, clamped or otherwise mounted to the element. In preferred embodiments it or they are is mounted by securing a tab thereof between the element and the heater plate. This simplifies manufacture and ensures good thermal conductivity between the element and the heat bridge.

In accordance with the invention a heating element is formed on or mounted to the underside of the heater plate. In many circumstances a conventional sheathed element will be preferred. In some applications however the element could comprise a resistance wire embedded in an insulating material in an integral channel formed on the underside of the heater plate, a closure member being provided thereover. Such arrangements are described in greater detail in WO 00/13561.

The arrangements set out above address one of the functions of the omitted diffuser plate - namely conducting heat to the thermal sensor. Another preferred feature addresses the lateral heat flow from the element and thereafter into the liquid. In accordance with this preferred feature the stainless steel heater plate is shaped partially around the heating element, thereby increasing the contact surface area therebetween. It will be appreciated that the absence of a traditional diffuser plate and use of thin (<=0.4 mm) stainless steel greatly facilitate this.

This is considered novel and inventive in its own right and thus when viewed from a further aspect the invention provides an electric heater for a liquid heating vessel comprising a heater plate for closing an opening in the base of the liquid heating vessel and a heating element attached to or formed on the underside of the plate, wherein said heater plate is formed partially around the element.

Preferably at least half and more preferably at least two-thirds of the perimeter of the element is in contact with the heater plate. However, it is also preferred that the resulting upper profile of the heater plate does not include a re-entrant portion. In other words the tangent to the profile should not undergo a reversal of rotational direction in traversing the profile. Such re-entrant profile would tend to lead to a collection of scale and dirt. Moreover this allows the plate to be streamlined - i.e. to match the natural convection flow pattern of water which prevents stagnation zones.

In preferred such embodiments the element has an upwardly tapered profile. This is beneficial firstly in helping to constrain relative lateral thermal movement between the element and heater plate during brazing due to differences in thermal masses.

Secondly, it has been found that this can help to enhance circulation of water. More particularly the Applicant has appreciated that it is preferable to form the upper surface of the heater plate to conform generally to the natural convection flow pattern of the water during heating. When a conventional underfloor heating element is provided generally towards the periphery of a flat plate, water above it will be heated and rise in a column as a result of its lower density. This will draw water from both sides which meets above the element. The water will then rise to the top and sink again generally in the centre of the vessel until it hits the plate and is so diverted left or right. This pattern, especially the counter currents that blend into one another, will generally lead to a tendency for stagnation zones to be created immediately above the element and the centre of the plate where there is little movement of water. In the former case this is undesirable as it increases the tendency for localised nucleate boiling which generates noise. In the latter case it limits the accuracy with which the temperature of the water may be sensed by a thermal sensor in the central region of the plate.

The Applicant has appreciated however that the tapered shape of the plate formed over the element referred to above enhances circulation by reducing the tendency for stagnation zones to form. Effectively the plate is preferably streamlined - i.e. conforms to the natural flow pattern of water over it.

Thirdly, such a profile assists removal of the element from the tool in which it is placed during manufacture to compact the magnesium oxide powder.

Preferably the heating element has a substantially triangular profile, most preferably with the sides thereof rounded rather than straight to maximise surface area.

When viewed from a yet further aspect the invention provides an electric heater for a liquid heating vessel comprising a heater plate for closing an opening in the base of the vessel and a heating element formed on or attached to the underside of the plate, said heating element having an upwardly tapering sectional profile.

For example the profile may be substantially triangular and arranged with the apex of the triangle uppermost.

The Applicant has however appreciated a potential problem with forming the heater plate partially over the element - namely that in the situation where the vessel is allowed to boil dry, the portion of the plate over the heater is likely to be exposed before surrounding parts of the heater since it will be higher. This problem could be exacerbated where the vessel is operated on a slight incline since part of the heater will be exposed first but it may not be the part closest to the element protection thermal sensor. It is an object of the invention to reduce the risk associated with this and thus in preferred embodiments the heating element is configured so that one or more portions thereof arranged in use to be in the vicinity of a thermal sensor are raised above the general plane of the rest of the element.

This arrangement is novel and inventive in its own right and thus when viewed from a further aspect the invention provides an electric heater for a liquid heating vessel comprising a heater plate for closing an opening in the base of the vessel and a heating element formed on or attached to the underside of the heater plate, wherein said heater plate and said heating element are locally raised in the vicinity of a thermal sensor. In other words, the circumferential profile of the plate and element is locally raised in the vicinity of a thermal sensor.

Preferably the element is raised in two places, most preferably diametrically opposed. This ensures that the response to overheating when the heater is operated at an angle is no worse than if the plate were planar and for most tilt directions will be an improvement. The reason for this is that it is preferable in many circumstances to provide two independent thermal protection systems that can interrupt power in the event of overheat. This ensures that safety standards can be met which require a backup protector if the main protector is disabled. This can be provided by two 'primary' protectors which essentially operate as backups for each other. The potential problem with this arrangement is that they cannot both be provided at the centre of the heater. However by providing them at opposite sides even in the worst case where the vessel is tilted on the axis joining the two raised regions, they will be exposed as quickly as a single central region would have been. In all other cases one or other will be exposed more quickly. The Applicant has further appreciated that this could increase the viability of elements comprising a resistance wire embedded in an integral channel as described earlier since these have tended to suffer with the problem of low thermal conductivity making overheat safety protection more difficult, especially if a diffuser plate were not provided. Such an element with two raised regions is therefore particularly preferred. Preferably no diffuser plate is provided.

The Applicant has further appreciated that performance under conditions when the vessel begins to boil dry can be improved by providing the element (and therefore the heater plate) with at least one locally lowered portion, particularly in a region susceptible to overheating. The lowered portion advantageously acts to trap a volume of liquid and thereby prevent that region of the element from overheating when the vessel begins to boil dry. Conveniently therefore the lowered portion is in a region of the element away from a thermal sensor. This arrangement is novel and inventive in its own right and thus when viewed from a further aspect the invention provides an electric heater for a liquid heating vessel comprising a heater plate for closing an opening in the base of the vessel and a heating element formed on or attached to the underside of the heater plate, wherein said heating element has comprises at least one portion that is locally lowered.

Preferably the lowered portion is away from the vicinity of a thermal sensor. This ensures that even if the heater is operated at an angle such that it is a region away from the vicinity of a sensor that is tilted up out of the bulk of liquid in the vessel and would locally overheat, the lowered portion acts to trap a volume of liquid and thereby prevents the element from overheating in that region.

In preferred embodiments the lowered portion is substantially diametrically opposite the cold tails. This gives protection to the part of the element which is most vulnerable if the heater is operated on a slight tilt since the cold tails region is less likely to overheat. Preferably two lowered regions are provided, preferably diametrically opposite one another e.g. in the region of the cold tails and opposite that respectively. This ensures that the response to overheating when the heater is operated at an angle is no worse than if the plate were planar and for most tilt directions will be an improvement.

The lowered region(s) is/are advantageous alone but preferably the element has at least one raised portion as set out above. Preferably at least two raised portions and one or more lowered portions is provided This allows an improved performance where the vessel is operated at an angle since the lowered portions may be arranged away from thermal sensors and so prevent the lowered part of the element being exposed until such sensors have interrupted the power supply to prevent overheating. In particularly preferred embodiments the element comprises two raised and two lowered portions, preferably alternating around the circumference. In one embodiment the lowered portions are approximately half way between two diametrically opposed raised portions. In other words, the lowered portions and the raised portions are alternately spaced at 90° around the plate. This provides optimum overheat protection backup in the worst case where the vessel is tilted on the axis joining the two raised portions.

It is preferable that the plate is provided with sloping transition portions of a median height in between the raised and lowered portions. Equally although the raised and/or lowered portions may be confined to a discrete radial band, preferably they have a tapering extent across the radius of the plate - e.g. like spokes.

As well as providing backup overheat protection, the Applicant has appreciated a further benefit of the circumferential profile of the heater plate having at least one raised and/or lowered portion. Such hill and/or trough features can act to absorb and disguise circumferential distortion (mode II distortion) by being compressed or stretched circumferentially thereby marginally enhancing and/or reducing the local raised/lowered portions without significantly affecting the overall appearance of the plate. Of course any combination of raised and/or lowered portions, circumferentially spaced on the surface of the heater plate, will help to disguise mode II distortion. Furthermore, the locally raised and/or lowered portions help to stiffen the heater plate.

As has been explained hereinabove, the structural rigidity of a heater can in accordance with some embodiments of the invention be enhanced by attaching to it a steel support bracket. The Applicant has also devised a further way in which the rigidity of an underfloor heater may be enhanced. Thus according to a further set of embodiments the element is shaped into a closed loop such that the two ends thereof are bent substantially at right angles to the loop. Such an arrangement is beneficial since it affords support to the heater plate all the way round. It also increases the surface area of the element tube in contact with the heater plate since the element will be longer than the traditional horse-shoe elements. Having the ends of the element at right angles to the rest allows electrical connections to be made to it without interfering with each other.

Such arrangements as are set out above are novel and inventive in their own right and thus when viewed from a yet further aspect the invention provides an electric heater for a liquid heating vessel comprising a heater plate for closing an opening in the base of a liquid heating vessel and an elongate heating element formed on or mounted to the underside of said heater plate, wherein the heating element is shaped into a closed loop such that the two ends thereof are bent substantially at right angles to the loop.

Preferably the two ends of the element are attached to one another e.g. by brazing. This will serve further to increase the support it gives. Preferably the element sheath is steel, preferably mild steel. This is cost effective and further enhances strength.

It will be appreciated from the foregoing that in preferred embodiments of the invention the heater plate and heating element are both made from steel (e.g. stainless steel and mild steel respectively). This is beneficial in its own right e.g. from a material cost point of view and thus when viewed from a further broad aspect the invention provides an electric heater for a liquid heating vessel comprising a heater plate for closing an opening in the base of the vessel and a sheathed heating element formed on or mounted to the underside of the heater plate wherein the heater plate and the sheath of the heating element are both made of steel.

However having the heater plate and element sheath both of steel brings another advantage. It allows the heater to be manufactured without any aluminium parts which as well as being desirable from a cost point of view means that the limitation on brazing temperature implied by the melting point of aluminium is removed. This means that the steel parts can be brazed together in a higher temperature reducing atmosphere furnace. This has the advantages that it can eliminate the need for a flux, which in turn eliminates the need to provide channels or pores for allowing the flux gasses to escape; and that it can eliminate the need for cleaning or polishing of the water-facing side of the heater plate after brazing. Polishing a stainless steel plate is a costly exercise and requires the plate to be rotationally symmetric.

Thus when viewed from another aspect the invention provides a method of manufacturing a heater for a liquid heating vessel comprising providing a steel heater plate for closing an opening in the base of the vessel and brazing a sheathed heating element having a steel sheath onto the underside of the heater plate in a reducing atmosphere furnace.

In accordance with this feature heater could have a bare steel sheath but it is preferably flash-coated in copper. Such tubes are known in the art as Bundy tubes. This facilitates brazing.

Preferably the heater also comprises a steel support bracket extending across and attached to the heater plate or two steel heat bridges attached to the heating element. The support bracket or heat bridges are preferably also brazed on in a reducing atmosphere, most preferably at the same time. Preferably the bracket or heat bridges are coated in zinc e.g. by being made of Zintec.

Where, as is preferred, a stainless steel heater plate having a thickness of less than or approximately 0.4 mm is employed, the previously described arrangements can provide sufficient rigidity to the heater plate across the majority of its diameter. However, the Applicant has appreciated that the part of the heater plate outboard of the element may, in some circumstances lack sufficient rigidity in these arrangements. According to a further possible feature therefore a steel support bracket or steel heat bridges extends outwardly of the element preferably substantially to the edges of the plate. This can provide the required additional rigidity.

Additionally or alternatively the plate may be provided with strengthening means outwardly of the element. In one example a series of radially extending ribs is provided fanning out from the element. Alternatively an undulating pattern may be provided in this region.

Such an arrangement is novel and inventive in its own right and thus when viewed from a yet further aspect the invention provides an electric heater comprising a heater plate for closing an opening in the base of a liquid heating vessel and a heating element arranged around and formed on or attached to the underside of said plate, said heater plate further being provided with support means outwardly of the element for providing structural support to the peripheral region of the plate.

The support means preferably comprise a series of radially extending ribs.

In accordance with all of the foregoing aspects where not already specified the following features are preferred individually and independently of one another in any combination: that the heater plate has a thickness of less than or substantially equal to 0.4 mm; preferably less than 0.3 mm, more preferably substantially equal to 0.2 mm; that the heater plate is of stainless steel; that the heater is suitable for heating water to boiling; that the heater plate is circular or substantially so; that the power of the heating element is in the approximate range 900 W to 3000W, preferably 2 to 3 kilowatts; and that a support bracket, preferably of steel, extending across and attached to the heater plate is provided.

The diameter of the heater plate is preferably between 80 and 300 mm, more preferably between 100 and 250 mm, more preferably between 120 and 220 mm and most preferably between 170 and 210 mm. Looked at another way the thickness is preferably less than 0.5% of the diameter, more preferably less than 0.3%, most preferably less than 0.2%.

Although only one heating element has been mentioned in respect of the embodiments described above, additional elements could also be provided - e.g. to provide a separate keep-warm element.

Although in at least some of its preferred embodiments the invention allows a heater with a diffuser plate to be successfully produced, the invention is not limited to heaters without a diffuser or similar component. For example a thinner or smaller diffuser or one made of a cheaper material could be used whilst still retaining some of the benefits of the invention. Indeed many aspects of the invention are beneficial in their own right even if a conventional diffuser plate were to be used. For example it is believed that a plate as thin as 0.2 or 0.3 mm has never successfully been used even with a diffuser plate.

Except where they are mutually exclusive from a technical point of view, all of the individual features set out hereinabove may be provided in any and all combinations within the scope of the invention.

Wherever a component is said to be of a certain material it is to be understood that this does not exclude that component being coated in another material.

Certain preferred embodiments of the invention will now be described, by way of example only, with reference to the accompanying drawings in which:
Fig. 1 is a schematic view of a sheathed heating element in accordance with a first embodiment of the invention;
Fig. 2 is a schematic view of a heater plate onto which the element of Fig. 1 may be fitted;
Fig. 3 is a schematic view of a support bracket for use with the heater of the first embodiment;
Fig. 4 is a sectioned perspective view through the heater plate and support bracket with the element omitted;
Fig. 5 is an underside elevation of the heater and support bracket of another embodiment;
Figs. 6a and 6b are respectively a sectional and rear elevational view of the heater assembly including control unit;
Figs. 7a and 7b are respectively a sectional and rear elevational view of a heater in accordance with a second embodiment of the invention;
Fig. 8 is a bottom elevational view of a heater plate in accordance with another embodiment;
Fig. 9 is a plan view of a heater plate in accordance with a further embodiment;
Fig. 10 is a perspective view of a heater plate in accordance with another embodiment of the invention; and
Fig. 11 is a sectioned perspective view through the heater plate of Fig. 10;
Fig. 12 is an underside perspective view of the heater plate of Fig. 10 with a sheathed heating element attached;
Fig. 13 is a perspective view of the heating element with the plate omitted;
Fig. 14 is a perspective view of another embodiment of the invention having separate heat bridges;
Fig. 15 is a section though the heater of Fig. 14; and
Fig. 16 is a section view similar to Fig. 15 with the heat bridges removed.

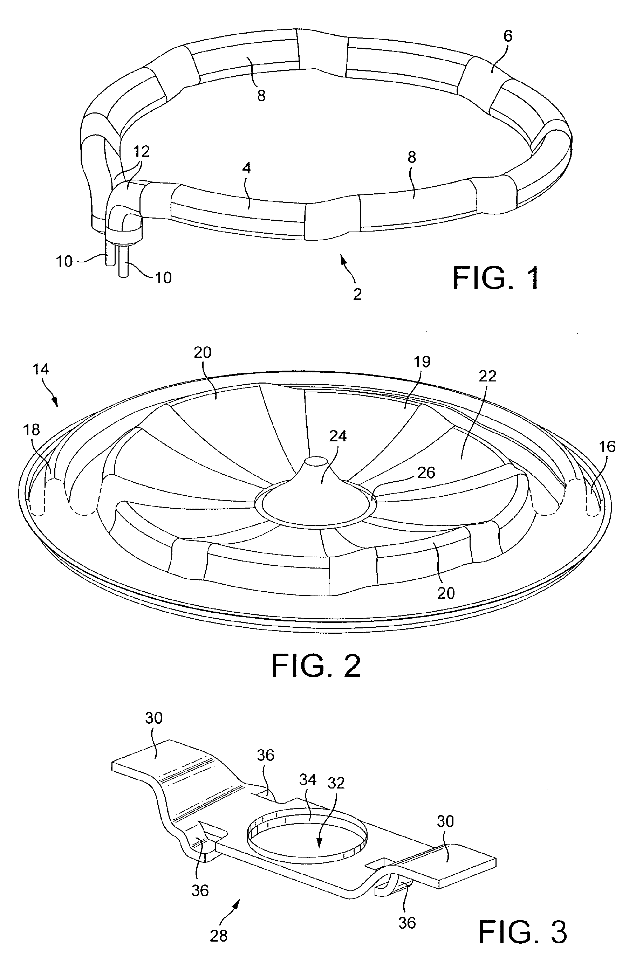

Fig. 1 shows the sheathed heating element 2 of a first embodiment before it is attached to the underside of the heater plate. The element is broadly manufactured in a standard way by placing a coil of nickel-chromium resistance wire into a tubular metal sleeve and filling the remainder of the tube with magnesium oxide for thermal conduction and electrical insulation. However, there are several features of the heating element shown in Fig. 1 that are new. Firstly, rather than the standard aluminium outer tube, in accordance with one aspect of the invention, the tubular outer sheath is made from steel using a suitable mild steel.

Secondly, the cross-sectional shape of the tubular sheath 4 is not circular throughout most of the length of the element 2 but rather is generally triangular with its apex on the upper side thereof i.e. that which is nearest the water. Thirdly, the heated part of the element 2 is not all in a single plane but rather comprises two upwardly kinked sections 8 diametrically opposite one another and each approximately 90° away from the cold tails 10.

Turning to the cold tails 10 it will be seen that in contrast to the usual horseshoe element shape, in this embodiment the heated part of the element 2 extends around substantially 360° with the two ends of the element 12 touching one another and bent at right angles to the general plane of the element so that the cold tails 10 which project therefrom bend downwardly.

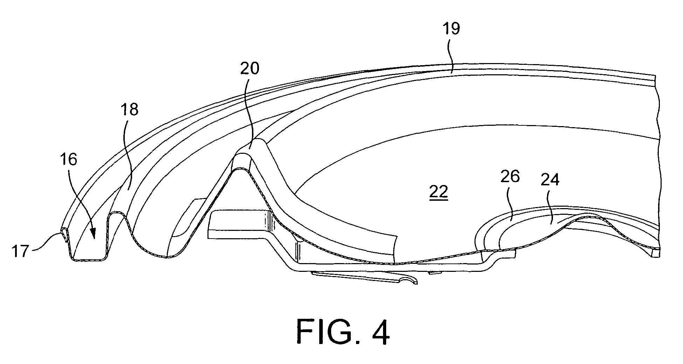

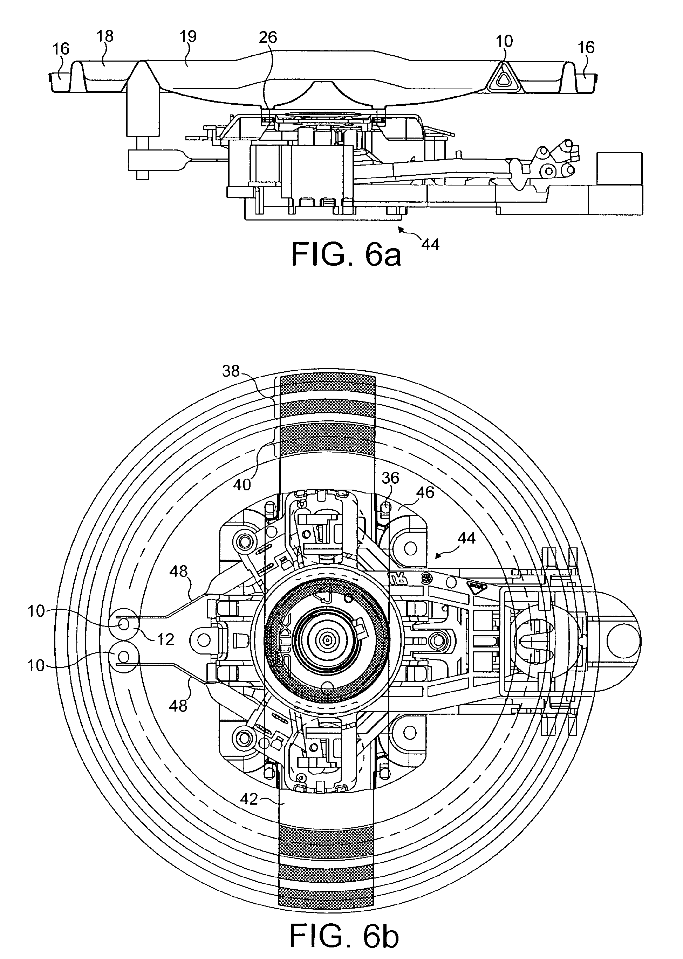

A schematic view of the heater plate to which the element 2 is to be attached is shown in Fig. 2. It may also be seen in greater detail in Figs. 4, 6a and 7a. The first general impression of the heater plate 14 is that virtually none of it is flat. The plate 14 is made from stainless steel as conventional plates are, but rather than being 0.4 to 0.8 mm thick as is conventional, the thickness of the plate 14 is only of the order of 0.2 to 0.3 mm. Furthermore, as is clearest from Fig. 6a, there is no aluminium diffuser plate several millimetres thick attached to the underside of the plate as there would be in a conventional underfloor heater. Indeed there is no diffuser at all in the conventional sense.

Turning to the more specific features of the plate, at the periphery there is an upwardly open channel 16 for clamping onto the depending edge of a vessel wall. As may be seen most clearly from Fig. 4, the upper edge of the outer wall of the channel 16 is not a simple edge as it would be in a typical Sure Seal (trade mark) plate but is rolled over to form a lip 17. This gives increased rigidity in order partially to compensate for the reduced strength of the thin grade of stainless steel used to form the plate. The inner wall of the channel 16 rises to ridge 18 which is also a common feature of heater plates incorporating the Sure Seal (trade mark) heater sealing system. However, inwardly of the ridge 18, rather than the rest of the plate being flat as would be conventional, there is provided a further ridge 19 which is shaped to accommodate the heating element 2 shown in Fig. 1. It is thus generally triangular in sectional profile with the apex of the triangle at the top. It also has two diametrically opposed additionally raised portions 20 to accommodate the kinked portions 8 of the heating element. As will be seen from Fig. 6a, the two ridges 18,19 are at approximately the same height except in the two raised regions 20.

Inwardly of the element ridge 19 is a dished portion of the plate 22. However, it is not a simple dish shape since in the centre of the plate is a conical formation 24. The face of the plate 14 inwardly of the element ridge 19 therefore has the approximate shape of the lower surface of a torus. Around the base of the central cone 24 is an annular recess 26, the purpose of which will be explained below.

It may be seen therefore from Fig. 2 and Figs. 4, 6a and 7a that the plate 14 has several areas of different curvature: for example the ridges 18,19; the dished portion 22 and the conical central portion 24. It also has several steps: for example the inwardly facing wall of the outer ridge 18; and the annular recess 26 around the cone 24. The combination of the different curvatures and the combination of areas of curvature with stepped regions increase the rigidity of the plate but also help to disguise distortion encountered during brazing.

Fig. 3 shows a schematic view of a support bracket 28 which is fitted to the underside of the element and plate assembly 2,14. The attachment of the support bracket 28 to the rest of the heater will be explained with reference to the following Figures. However, the general features may be seen by considering the schematic view of Fig. 3. The bracket is approximately rectangular in plan with its two ends bent upwardly to form a pair of spaced flanges 30. In the lower central region of the bracket 28 is a circular hole 32 boarded by a slightly raised flat annular region 34. Three tabs 36 are cut and bent out of the plane of the bracket to form fixings for a control unit.

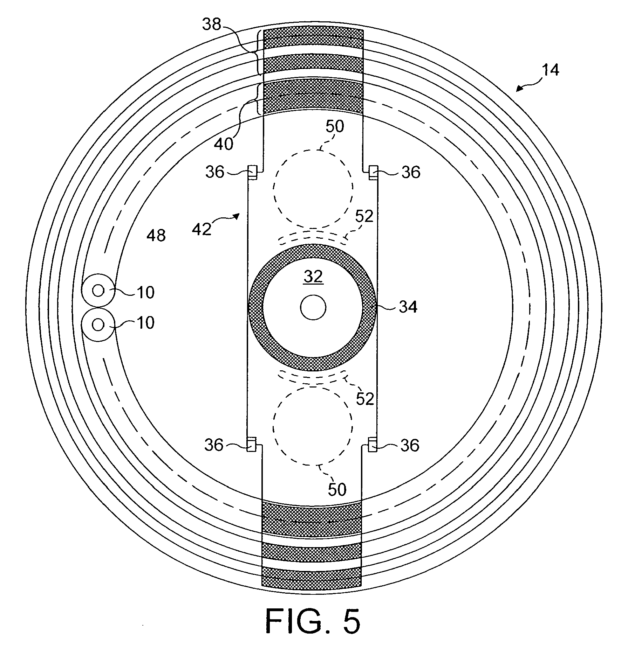

Construction of the heater will now be described with reference to Figures 5, 6a, 6b, 7a and 7b. It should be noted however that the shape of the support bracket in this embodiment is of slightly different form to that shown in Fig. 3 but the general features are the same.

Firstly the element 2 is produced. This starts with a straight round tube of mild steel flash-coated in copper, known in the art as a Bundy tube, having an outer diameter of 8.8 mm. A coil of nickel-chromium resistance wire is then stretched centrally down the core of the tube. This is then filled with magnesium oxide with a density typically 2.3 grams per cubic centimetre (gcm⁻³). The tube is then roll-reduced in a rolling mill to an outer diameter of typically 8.0 mm, increasing the density of the magnesium oxide to typically 3.0 - 3.2 gcm⁻³. The tube cold ends 12 are then bent 90 degrees and the tube formed in a circle of typical diameter 100 mm. The tube tends not to compress on the inner radius but does stretch on the outer radius during bending. This results in micro cracks in the compacted magnesium oxide. The element therefore needs to be recompacted. It is at this final stage that the triangular shape is introduced throughout most of its length. The cold ends 12 are held together by a tie or a clip so that they can be joined during the brazing process.

The plate 14 is formed from a sheet of 0.4 mm or thinner stainless steel which is then pressed into the shape shown in Fig. 2 on a suitable former. The plate 14 is inverted and a suitable braze is then applied to the inside of the element ridge 19 and the element 2 is placed inside the ridge. A copper-only braze material, without any silver, can be used as is explained below.

Next the steel support bracket 42 is fitted. As mentioned above this differs a little from the one in Fig. 3. It is stamped from zinc-coated mild steel approximately 0.8 to 1.2 mm thick and has a substantially planar central portion and two outer flanges 38,40, one at either end. The outer flanges 30,40 are parallel to, but vertically offset from, the central portion. At each corner of the central portion is a resilient clip 36 bent out of the plane of the bracket. In the centre of the central portion is the circular hole 32 bordered by a lip 34. It will be seen that steel support bracket 42 extends right across the diameter of the plate 14 between the two points approximately 90° away from the cold tails 10. The bracket 42 will thus pass underneath the raised portions of the element and plate 8,20.

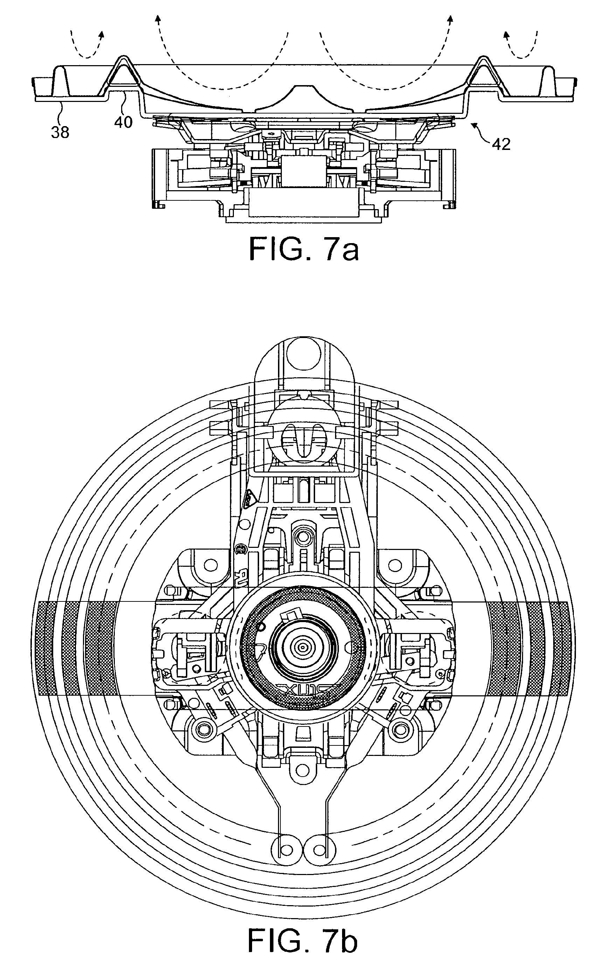

More braze material is applied to the outer flanges 38,40 of the support bracket 42 (see Fig. 7a) and also to the annular lip 34 around the central hole 32 in the bracket and the bracket is placed on top of the element 2 and the bottom of the channel 16 as shown in Fig. 5. It is also placed between the ends 12 of the element.

The whole assembly may then be placed into a brazing furnace supported for example on a ceramic or stainless steel ring or band. Since the element plate 14, element sheath 4 and the support bracket 42 are all steel components they may be brazed at around 1050 °C in a reducing atmosphere furnace, without the use of flux. This is a much higher temperature than would have been possible if any aluminium components had been present, limiting the braze temperature to approximately 600 °C. The omission of flux obviates the need to provide means for venting flux gases which are normally produced when a flux is used. The reducing atmosphere enables a silver-free braze to be used and importantly means that the plate comes out clean without the need for a subsequent polishing step, significantly reducing manufacturing time and cost.

The very thin grade of stainless steel used for the plate 14 and the lack of a thick uniform diffuser plate on its underside mean that the plate is susceptible to distortion as it cools after the brazing process. More particularly the thin plate 14 will cool relatively quickly whereas the element 2 will take much longer to cool. Thus as the element 2 cools and contracts it will apply a compressive force to the already-cool plate, causing it to deform. In conventional underfloor heaters the diffuser plate would prevent this by neutralising the thermal differentials.

Distortion is minimised to some degree in accordance with the embodiments of the invention by the various ridges and curved portions in the profile of the heater plate which act to increase its rigidity as compared to a planar plate. However, some distortion will inevitably occur and will be most likely in those areas of the heater plate 14 which experience the largest temperature differential during brazing and these will be where the heating element 2 and the support bracket 42 are in contact with the plate. Thus, distortion is most likely in the region of the outer ridge 18, the element ridge 19 and the annular recess 26. However, the design of the plate 14 is such that any distortion in these, or indeed in other areas, is likely to be disguised. For example, distortion around the outer most ridge 18 will tend to take place within the peripheral channel 16 or the valley formed between the two ridges 18, 19. It is therefore unlikely to be perceptible to a user looking inside a vessel incorporating the heater. Mode II distortion around the element ridge 19 will be disguised by the raised portions 20. Radial distortion around the annular recess 26 will similarly be disguised by the well defined edges of that recess. Indeed, the annular symmetry of the area of contact between the support bracket 42 on one hand and the heater plate on the other hand means that distortion is also likely to have a substantially annular symmetry so that even if it is perceptible it will appear to be part of the machined design.

As well as the inherent enhancement to rigidity from the profile of the heater plate 14, further significant structural support is given by the heating element 2 itself which by virtue of being brazed together at its two ends 12 has the stiffness of a solid ring. Of course, the support bracket 42 also gives some rigidity to the structure. In particular, since in this embodiment the support bracket 42 extends right to the edges of the heater plate 14, it gives additional stiffness to the region of the plate outwardly of the element which might otherwise be weaker than the part of the plate inside the element. This is of greatest benefit when the plate is significantly wider then the element - e.g. in a traditional style of kettle.

Once the heater has been brazed and allowed to cool down, the control unit 44 may be fitted. This is snap-fitted to the support bracket 42 by four resilient tabs 36 bent out of the plane of the middle portion of the bracket which engage in suitable apertures in the mounting plate 46 of the control unit. Other possibilities include a slide and snap arrangement or tabs which are folded over the mounting plate 46. The control unit 44 is a variant of the Applicant's standard U Series of controls. The only significant modification is that the electrical supply from the control unit 44 to the element is made directly by means of a pair of extended tabs 48 which are resistance welded directly to the cold tails 10. This is facilitated by the precision achievable with the construction shown whereby the mounting plate 46 of the control unit is in precise registration with the element tube 4 via the support bracket 42. This obviates the need for connecting wires and spade connectors etc. although these may be provided if desired.

The two bimetals of the control unit 44 will bear against the flat central portion of the support bracket 42 and their location in use is shown by the dashed outline circles 50 in Fig. 5. As shown the bimetals will be heated via the support bracket 42 both directly from the heating element 10 by means of the inner of the two pairs of outer flanges 40; and by the water in the vessel by means of the annular region of contact 26,34 between the brackets and the plate. However, depending upon the type of operation required, thermal restrictions in the form of cut-outs may be formed in the support bracket 42 in order to alter the degree of influence of the element 10 and the water of the vessel respectively on the temperature of the bimetals. For example, by providing crescent-shaped cut-outs 52, shown in dashed lines in Fig. 5, between the bimetal location 50 and the annular contact area 26,34 between the bracket and the plate, the bimetals can be arranged to be influenced predominantly by the temperature of the heating element.

Having the bimetals responsive primarily to the element temperature is desirable in allowing overheating of the element to be detected quickly and power to the element to be interrupted as a consequence. In fact, the raised portion of the element and the plate 8,20 will now become apparent in purpose. For as the water in the vessel boils away (for example if a boiling cutout provided should malfunction) the raised regions of the plate 20 will be exposed first and will thus be the first to rise rapidly in temperature. Since these are directly above the support bracket 42 and in particular its region 40 of contact with the element 10, this rise in temperature will be rapidly communicated to the bimetals to operate them to interrupt power to the element 10. By having two raised regions 20 diametrically opposed to one another, this safety operation will not be adversely affected if the vessel is tilted slightly. In other words two independent, separated overheat protection mechanisms may be provided which meet all current safety standards and each of which is a backup for the other. Even in the worst case where the vessel is tilted on the axis joining the two regions 20, they will be exposed as quickly as a single central region would have been. In all other cases one or other will be exposed more quickly.

Another advantage which may be obtained in accordance with the invention may be appreciated by looking at Fig. 7a. As is demonstrated by the dashed arrow lines, the streamlined shape of the plate 14, including the element ridge 19, the dished portion 22 and the central cone 24, encourages large scale circulation of water in the vessel during heating since the shape conforms to the natural convection pattern. This helps to avoid the formation of stagnation zones and thus reduces the amount of noise generated during heating as a result of nucleate boiling, which can be a problem when high power heaters are used, and allows a thermal sensor more accurately to sense the temperature of the water as it is being heated.

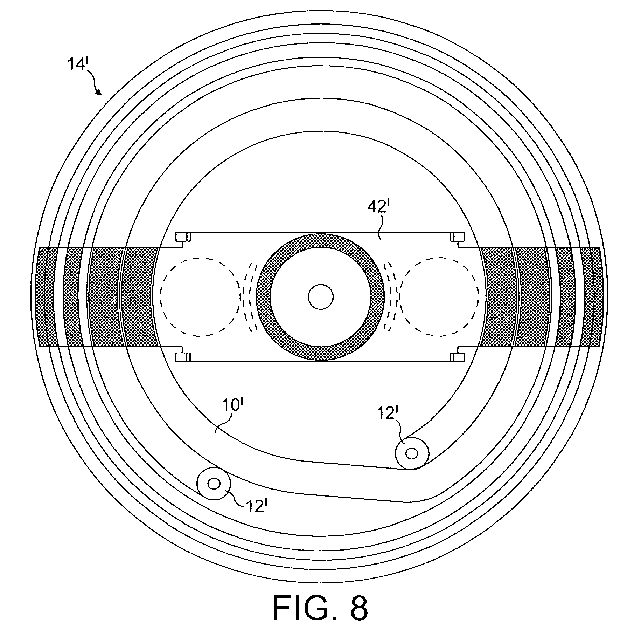

Figure 8 shows another embodiment of the invention. This is very similar to the previously described embodiment except that the element 10' extends significantly beyond 360° and indeed is almost two complete turns in length. Consequently the ends 12' of the element are not in contact with one another in this embodiment although this is compensated by the fact that a portion of the element spans the gap between the two ends and thus there is no reduction in the rigidity of the heater plate 14'. Of course, the double width of the element throughout most of its length means that there will need to be a double element ridge provided in the heater plate. Otherwise construction and operation of this heater is very similar to that described previously and will not be described again. The advantage of this arrangement is that for a given power density a higher power may be achieved in a smaller diameter. This is useful in small appliances (e.g. coffee makers) or to reduce the material cost of the element plate further.

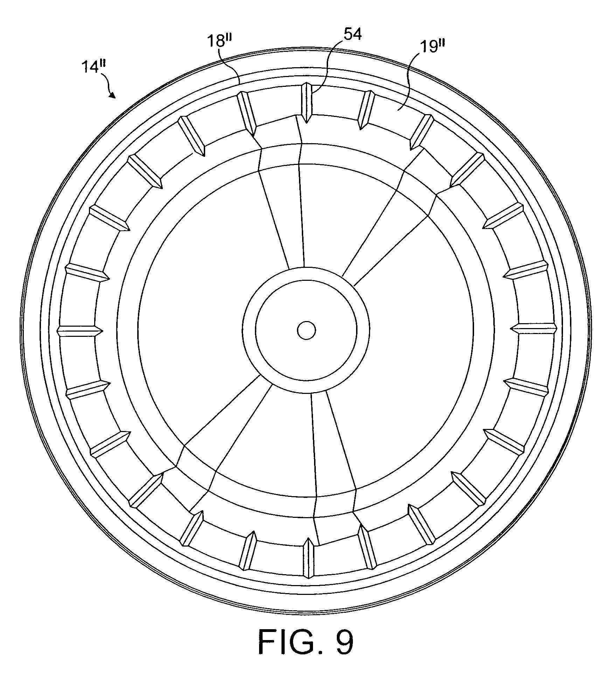

A further embodiment of the invention is shown schematically in Fig. 9. This Figure is a plan view of an element in accordance with this further embodiment in which a circumferentially spaced series of radially extending ribs 54 is provided in the valley formed between the outermost ridge 18'' and the element ridge 19''. This also serves to strengthen the peripheral region of the heater plate 14'' such that it may then not be necessary to extend the support bracket to the edges of the heater plate 14'' as in previous embodiments, but rather it could extend outwardly only as far as the element. This would of course reduce the material cost of the support bracket whilst requiring only the formation of some additional features in the stainless steel plate when it is formed. The support bracket for use in this embodiment is therefore likely to be more similar to that shown in Fig. 3. As an alternative to the discrete ribs, an undulating wave form could be provided instead.

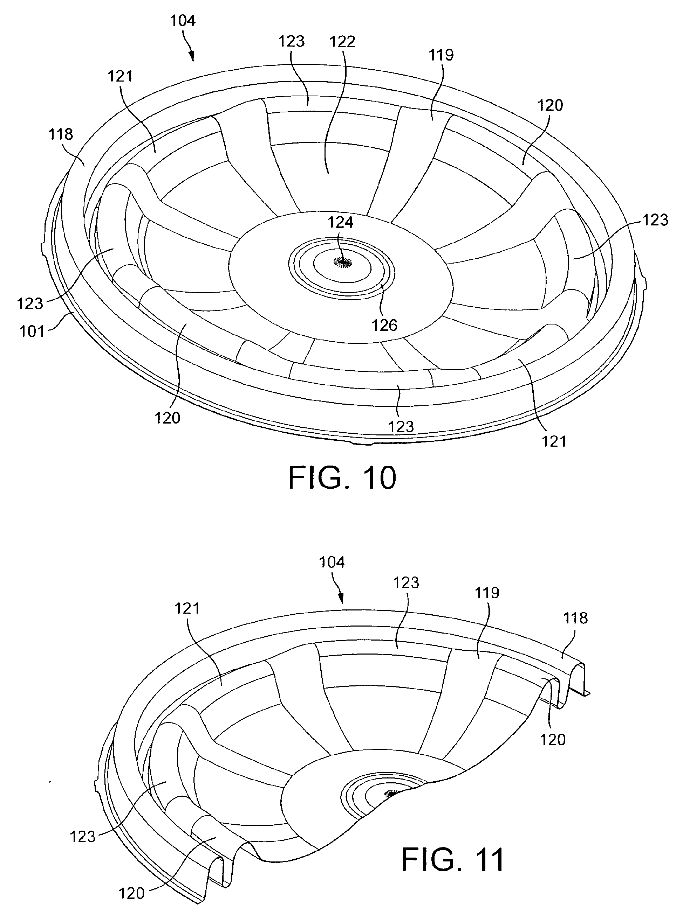

Another embodiment of the invention is shown in Fig. 10. This is similar to the embodiment previously described in relation to Figures 2-7 in that the heater plate 104 has an outer peripheral ridge 118, a ridge 119 shaped to accommodate a heating element attached to the underside of the plate, a generally dish-shaped portion 122, and a central dome 124 surrounded at its base by an annular recess 126. In this embodiment there is a flange 101 projecting from the bottom of the ridge 118 at the periphery of the plate. The plate is made from stainless steel and its thickness is 0.2 mm.

As will be seen from Figs. 10 and 11, the ridge 119 and the generally dish-shaped portion 122 of the plate have two diametrically opposed raised portions 120 and two diametrically opposed lowered portions 121, the alternate raised and lowered portions spaced at approximately 90° around the plate. In between the raised and lowered portions 120,121 there are intermediate portions 123 of median height. In other words, the circumferential profile of the plate undulates between three different height levels. The plate 104 therefore has variations in curvature not only in the radial direction, i.e. the ridges 118, 119, the dished portion 122 and the domed central portion 124; but also in the circumferential direction. The addition of the portions of different height in the circumferential direction further increase the rigidity of the plate. More particularly, the hills and troughs in the circumferential profile of the plate help to disguise mode II distortion produced during manufacture or during use.

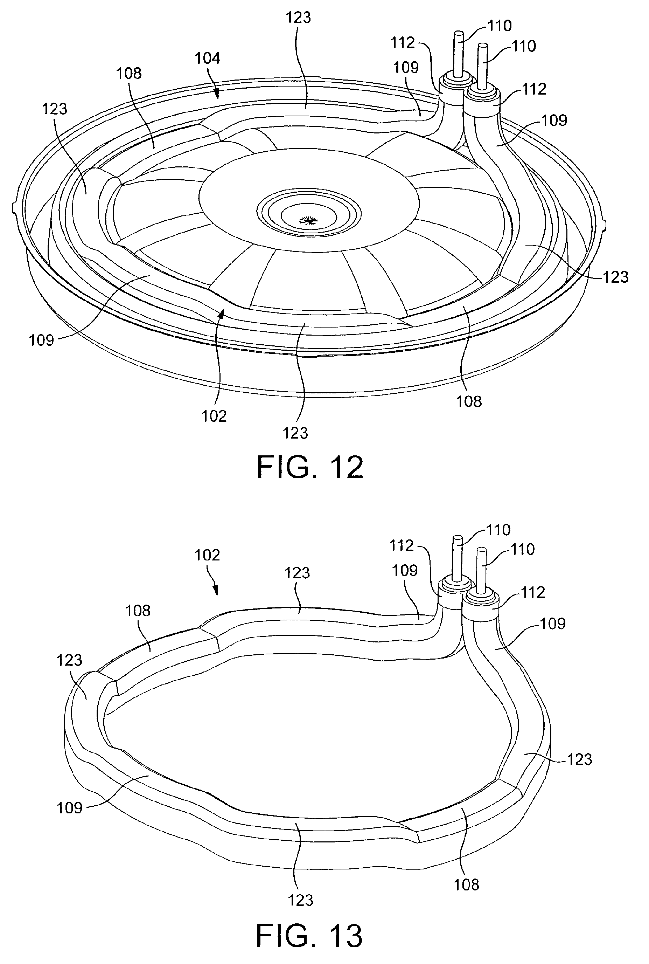

Fig. 12 shows a heating element 102 attached to the underside of the heater plate 104. The heated part of the element 102 extends around almost 360° with the two ends of the element 112 touching one another and bent at right angles to the general plane of the element so that the cold tails 110 which project therefrom bend downwardly.

As can be more clearly seen from Fig. 13, the heated part of the element 102 is not in a single plane but rather comprises sections 108,109 kinked alternately upwardly and downwardly to match the raised and lowered portions 120,121 of the ridge 119 in the heater plate 104. Two upwardly kinked sections 108 are spaced approximately 90° away from the cold tails 110, diametrically opposite one another. There is a downwardly kinked section 109 diametrically opposite the cold tails. The element is also kinked downwardly in the sections 109 adjacent to the ends 112.

As previously described in relation to the earlier embodiments, the raised portions of the element and plate 108,120 provide overheat protection by becoming exposed first if the vessel starts to boil dry, even if the vessel is tilted. A further advantage may be obtained in accordance with this embodiment of the invention by virtue of the lowered portions of the element and plate 109,121 spaced at approximately 90° from the two raised portions 108,120. In the worst case the vessel is tilted on the axis joining the raised portions 108,120 so that the uppermost part of the plate is opposite the cold tails 110. This regions of the plate and element is furthest from the thermal sensors so a rise in temperature will not immediately be communicated to the bimetals. However, the lowered portions 109,121 in these regions will trap liquid, preventing local overheating of the element, until the raised portions of the element 108 overheat and switch the bimetals.

Although in the embodiment described above the element is kinked to match the raised and lowered portions in the plate, this is not required. The plate may be formed with an undulating circumferential profile curvature and either a flat, kinked or sloped element then brazed onto it. The element may not be kinked as described above but could be planar while the plate may still be provided with raised and lowered portions, or other undulations, in its circumferential profile in the dished portion 122 inwardly of the element ridge 119. This would provide the benefits of disguising mode II distortion and increasing the rigidity of the plate, as well as trapping pockets of water to reduce the chance of overheat if the heater is operated when tilted. Alternatively, the element may not have distinct kinked regions as described above but may instead slope smoothly from a lower point in the region of the cold tails to a raised point at 90° from the cold tails, and back down to a lowered point opposite the cold tails. The angle of such a sloped element may be chosen to be approximately 3° in order that the vessel passes the standard test for boiling dry when tilted by 3°.

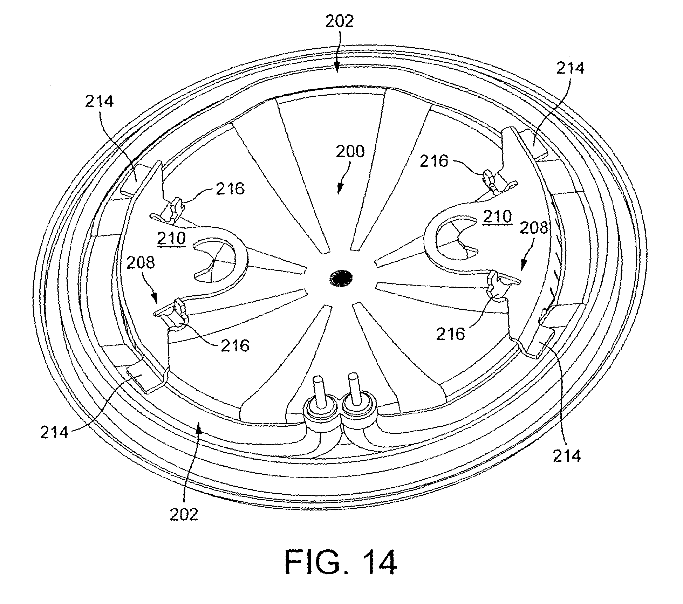

A further embodiment of the invention is shown in Figs. 14 to 16. This is similar to the previous embodiment of Figs. 10 to 13 and thus only the main differences will be described. The first main difference is in the shape of the central region 200. Rather than having a cone at the centre, the whole central region, inwardly of the element 202 is broadly formed as a continuous convex dome (when viewed from the liquid side). A channel 204 is formed at the periphery of the central region 200 where it meets the ridge 206 which accommodates the element 202. The convex central region 200 gives a good degree of rigidity to the plate whilst the channel 204 and the wall of the ridge 206 between them accommodate any distortion arising during manufacture or use without any overt signs thereof.

As in the previous embodiment the element 202 and the ridge 206 have a circumferential profile of varying height with alternating raised and lowered portions with median portions inbetween. This circumferential profile extends radially inwardly from the ridge across the central region towards the centre of the plate. However it tapers towards the centre so that the circumferential height variations are become less marked the further away from the ridge 206 they are.

A closer inspection of the sectional profile of the element 202 and the ridge 206 reveals that the shape is a little different from earlier embodiments. It is still upwardly tapering and indeed generally triangular but the sides bow outwardly especially near the apex to make the profile look more bullet-shaped. This further increases the contact surface area between the element 202 and the plate.

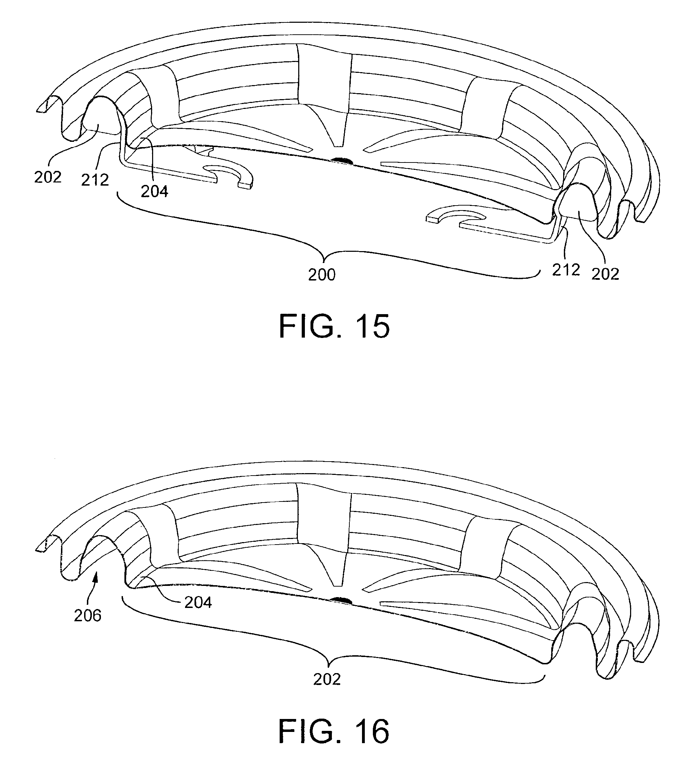

Another significant difference over earlier embodiments displayed by the one of Figs. 14 to 16 is that rather than a single thermally conductive member extending across the plate, there are a pair of separate steel heat bridges 208 on opposite sides of the plate. They are identical and comprise a planar horizontal flange portion 210 and a vertical flange 212. The horizontal flange is shaped to receive a circular snap-acting bimetallic actuator. As may be seen in Fig. 15, the vertical flange 212 is sandwiched between the sheath of the element 202 and the ridge 206 in the plate which accommodates the element. The bridges 208 are assembled together with the element 202 into the ridge 206 with braze material prior to being brazed. The vertical flange 212 is arcuate in plan profile to allow it to follow the contour of the element.

At the circumferential edges of each heat bridges 208 a pair of tabs 214 are released from the vertical flange 212 so as to bear onto the exposed face of the element 202. The main purpose of these tabs 214 is to give the heat bridges 208 stability against rocking sideways.

At the sides of the horizontal flange 210 of each heat bridge 208 are resilient clips 216 which are bent and released from the flange. These enable a control unit (not shown) to be snap-fitted between the heat bridges 208 with its bimetals against the respective horizontal flanges 210.

## Claims

1. An electric heater for a liquid heating vessel comprising a heater plate for closing an opening in the base of the vessel and a heating element formed on or attached to the underside of the heater plate, wherein said heater plate and said heating element are locally raised in the vicinity of a thermal sensor.

2. A heater as claimed in claim 1 wherein the element is raised in two places.

3. A heater as claimed in claim 1 or 2 wherein the element and the heater plate comprise at least one locally lowered portion.

4. An electric heater for a liquid heating vessel comprising a heater plate for closing an opening in the base of the vessel and a heating element formed on or attached to the underside of the heater plate, wherein said heating element has comprises at least one portion that is locally lowered.

5. A heater as claimed in claim 3 or 4 wherein the lowered portion is away from the vicinity of a thermal sensor.

6. A heater as claimed in claim 3, 4 or 5 wherein the or a lowered portion is substantially diametrically opposite the electrical terminations of the element.

7. A heater as claimed in any of claims 3 to 6 comprising two lowered regions.

8. A heater as claimed in any preceding claim wherein said element comprises two raised and two lowered portions alternating around the circumference.

9. A heater as claimed in any preceding claim wherein said raised/lowered regions of the heater plate have a tapering extent across the radius of the plate.

10. A heater as claimed in any preceding claim wherein said heater plate has a thickness of less than or substantially equal to 0.4 mm.

11. A heater for a liquid heating vessel comprising a stainless steel heater plate and a heating element directly bonded to or formed on the underside of said heater plate, wherein said heater plate has a thickness of less than or substantially equal to 0.4 mm.

12. A heater as claimed in claim 10 or 11 wherein the heater plate has a thickness in the range 0.2 mm to 0.4 mm.

13. A heater as claimed in claim 10, 11 or 12 comprising a steel support bracket attached to and extending across the heater plate.

14. An electric heater for a liquid heating vessel comprising a heater plate for closing an opening in the base of the liquid heating vessel and an electric heating element formed on or attached to the underside of said heater plate, the heater further comprising a steel support bracket attached to and extending across said heater plate.

15. A heater as claimed in claim 13 or 14 wherein said bracket comprises means for attaching a control unit thereto.

16. A heater as claimed in any of claims 13 to 15 wherein the bracket is in good thermal contact with one or both of the heating element or the base plate.

17. A heater as claimed in any of claims 13 to 16 wherein the bracket is in thermal contact with the heater plate in a number of discrete regions.

18. A heater as claimed in any preceding claim comprising a heat bridge between the heating element and a mounting location for a thermal sensor.

19. A heater as claimed in claim 18 comprising two heat bridges, one for each of two thermal sensors.

20. An electric heater for a liquid heating vessel comprising a heater plate for closing an opening in the base of the vessel, a heating element formed on or attached to the underside of the plate and a pair of heat bridges in good thermal contact with the heating element and mounting or being adapted to mount respective thermal sensors.

21. A heater as claimed in any preceding claim wherein the bracket and/or the heat bridges is/are mounted by a tab thereof secured between the element and the heater plate.

22. A heater as claimed in any preceding claim wherein the heater plate is formed partially around the element.

23. An electric heater for a liquid heating vessel comprising a heater plate for closing an opening in the base of the liquid heating vessel and a heating element attached to or formed on the underside of the plate, wherein said heater plate is formed partially around the element.

24. A heater as claimed in claim 22 or 23 wherein at least half and more preferably at least two-thirds of the perimeter of the element is in contact with the heater plate.

25. A heater as claimed in claim 22, 23 or 24 wherein the upper profile of the heater plate does not include a re-entrant portion.

26. A heater as claimed in any of claims 22 to 25 wherein the element has an upwardly tapered profile.

27. An electric heater for a liquid heating vessel comprising a heater plate for closing an opening in the base of the vessel and a heating element formed on or attached to the underside of the plate, said heating element having an upwardly tapering sectional profile.

28. A heater as claimed in any preceding claim wherein the element is shaped into a closed loop such that the two ends thereof are bent substantially at right angles to the loop.

29. An electric heater for a liquid heating vessel comprising a heater plate for closing an opening in the base of a liquid heating vessel and an elongate heating element formed on or mounted to the underside of said heater plate, wherein the heating element is shaped into a closed loop such that the two ends thereof are bent substantially at right angles to the loop.

30. A heater as claimed in claim 28 or 29 wherein the two ends of the element are attached to one another.

31. A heater as claimed in any preceding claim wherein the element comprises a steel sheath.

32. An electric heater for a liquid heating vessel comprising a heater plate for closing an opening in the base of the vessel and a sheathed heating element formed on or mounted to the underside of the heater plate wherein the heater plate and the sheath of the heating element are both made of steel.

33. A heater as claimed in any preceding claim comprising support means outwardly of the element for providing structural support to the peripheral region of the plate.

34. An electric heater comprising a heater plate for closing an opening in the base of a liquid heating vessel and a heating element arranged around and formed on or attached to the underside of said plate, said heater plate further being provided with support means outwardly of the element for providing structural support to the peripheral region of the plate.

35. A heater as claimed in claim 33 or 34 wherein said support means comprise a series of radially extending ribs.

36. An electric heater as claimed in any preceding claim wherein the heater plate is of stainless steel.

37. An electric heater as claimed in any preceding claim suitable for heating water to boiling.

38. An electric heater as claimed in any preceding claim wherein the heater plate is circular.

39. An electric heater as claimed in any preceding claim wherein the power of the heating element is in the approximate range 900 W to 3000 W, preferably 2 to 3 kilowatts.

40. An electric heater as claimed in any preceding claim wherein the element is a sheathed element.

41. A method of manufacturing a heater for a liquid heating vessel comprising providing a steel heater plate for closing an opening in the base of the vessel and brazing a sheathed heating element having a steel sheath onto the underside of the heater plate in a reducing atmosphere furnace.
